# EUROPEAN PATENT SPECIFICATION

(11) **EP 4 163 758 B1**
(45) Date of publication and mention of the grant of the patent: **18.02.2026**
(21) Application number: 21838418.8
(22) Date of filing: 13.05.2021
(51) Int. Cl.: G06F 1/16, G09F 9/30

(54) **FOLDABLE ELECTRONIC DEVICE INCLUDING DISPLAY PROTECTING STRUCTURE**
FALTBARE ELEKTRONISCHE VORRICHTUNG MIT ANZEIGESCHUTZSTRUKTUR
DISPOSITIF ÉLECTRONIQUE PLIABLE COMPRENANT UNE STRUCTURE DE PROTECTION D'ÉCRAN

(30) Priority: 08.07.2020 KR 20200083832
(43) Date of publication of application: 12.04.2023
(73) Proprietor: Samsung Electronics Co., Ltd., Suwon-si, Gyeonggi-do 16677 (KR)
(72) Inventor: MOON, Heecheul, Suwon-si, Gyeonggi-do 16677 (KR); YOON, Byounguk, Suwon-si, Gyeonggi-do 16677 (KR)
(74) Representative: HGF
(86) International application number: PCT/KR2021/006005
(87) International publication number: WO 2022/010085

(56) References cited:
- CN-A- 108 520 701
- KR-A- 20170 136 983
- KR-A- 20190 013 992
- US-A1- 2007 123 319
- US-A1- 2013 016 492
- US-A1- 2019 301 215

## Description

### [Technical Field]

Various embodiments of the disclosure relate to a foldable electronic device including a display protecting structure.

### [Background Art]

Electronic devices have been slimmer, and have been improved to have increased rigidity, reinforced design aspects, and differentiated functional elements. Electronic devices have evolved from unilaterally rectangular shapes to more diversified shapes. For example, an electronic device may have a deformable structure such that, when the same is used, a large-screen display can be used while ensuring portability. Examples of such electronic devices include foldable electronic devices, which have been commercially available, and which have at least two housings configured to operate so as to fold or unfold with regard to each other, and various improvements have been made to solve problems related to folding operations. Examples are described in CN108520701A, US20130016492A1 and KR20170136983A.

### [Disclosure of Invention]

### [Technical Problem]

The invention is defined by the appended claims. As such, examples or embodiments that fall outside the scope of the appended claims do not constitute the claimed invention. A foldable electronic device may include a hinge module (for example, hinge structure, hinge device, or hinge unit) and a first housing (for example, first housing structure) and a second housing (for example, second housing structure) connected to the hinge module so as to face each other. The foldable electronic device may operate in an in-folding and/or out-folding type as the first and second housings rotate in the range of 0-360° with regard to each other through the hinge module. The foldable electronic device may include a display (for example, flexible display) disposed across the first and second housings so as to be visible from the outside when the same is open 180°.

The foldable electronic device may include no rigid body (for example, front window) structure for protecting the display, unlike a general bar-type electronic device, because the display needs to be folded together with the housing structures. Therefore, the foldable electronic device may include a separate protective frame (for example, decorative member) fixed to the housings while a protective cover (for example, PI film and/or ultra thin glass (UTG)) remain disposed on the upper surface of the display, thereby protecting the edge of the display. In some embodiments, the foldable electronic device includes only the display, without a protective frame.

However, the foldable electronic device may include a disconnection space in which the protective frame is disconnected in order to provide a degree of freedom necessary for operations of the hinge module, resulting from folding operations, in a folding area corresponding to the hinge structure. For example, if the edge of the display may be exposed to the disconnection structure, foreign materials may penetrate into the space, and the user may lift the edge of the display by a fingernail or a sharp tool as desired, thereby causing erroneous operations of the display.

Various embodiments of the disclosure may provide a foldable electronic device including a display protecting structure.

Various embodiments may provide an electronic device including a display protecting structure, which has excellent assembly characteristics, and which can reduce manufacturing costs.

### [Solution to Problem]

According to various embodiments, an electronic device may include: a hinge module; a first housing connected to the hinge module; a second housing connected to the hinge module so as to be foldable with respect to the first housing; a display disposed to be supported by at least a portion of the first housing and at least a portion of the second housing via the hinge module; and at least one protective structure which is disposed to protect the edge of the display in a folding region corresponding to the hinge module, wherein the at least one protective structure includes: a support body disposed on at least a portion of the hinge module and including a first shaft and a second shaft which are spaced a predetermined interval apart from each other and protrude therefrom; a first wing structure including a first hinge arm including a first through hole and rotatably coupled to the first shaft in a manner where the first shaft extends through the first through hole; and a second wing structure including a second hinge arm including a second through hole and rotatably coupled to the second shaft in a manner where the second shaft extends through the second through hole, wherein the first hinge arm is rotatably coupled to the first shaft through a first opening at least partially formed in the first through hole, and wherein the second hinge arm is rotatably coupled to the second shaft through a second opening at least partially formed in the second through hole.

### [Advantageous Effects of Invention]

Exemplary embodiments of the disclosure may provide a display protecting structure for protecting the edge of a display in a folding area corresponding to a hinge module, thereby helping secure device reliability. In addition, the display protecting structure may reduce the number of components, thereby reducing manufacturing costs, and may have excellent assembly characteristics through a structural change, thereby helping improve productivity.

Various other advantageous effects identified explicitly or implicitly through the disclosure may be provided.

### [Brief Description of Drawings]

In relation to the description of drawings, the same or similar reference numerals may be used for the same or similar components.
FIG. 1 is a view illustrating an unfolded state of an electronic device according to various embodiments of the disclosure;
FIG. 2 is a view illustrating a folded state of the electronic device of FIG. 1 according to various embodiments of the disclosure;
FIG. 3 is an exploded perspective view of an electronic device according to various embodiments of the disclosure;
FIG. 4a is an exploded perspective view of an electronic device including protective structures according to various embodiments of the disclosure;
FIG. 4b is a view illustrating a configuration of each region of an electronic device according to various embodiments of the disclosure;
FIG. 5a is a perspective view illustrating a first blocking region B1 of FIG. 4b, which is a part of the electronic device including a protective structure according to various embodiments of the disclosure;
FIG. 5b is a plan perspective view illustrating the first blocking region B1 of FIG. 4b, which is a part of the electronic device including a protective structure according to various embodiments of the disclosure;
FIG. 5c is a partial cross-sectional view of the electronic device taken along line 5c-5c of FIG. 5b according to various embodiments of the disclosure;
FIG. 6a is an exploded perspective view of a protective structure according to various embodiments of the disclosure;
FIG. 6b is a perspective view of a coupled protective structure when an electronic device is in an unfolded state, according to various embodiments of the disclosure;
FIG. 6c is a perspective view of a coupled protective structure when an electronic device is in a folded state, according to various embodiments of the disclosure;
FIG. 6d is a partial cross-sectional view of the protective structure taken along line 6c-6c of FIG. 6b according to various embodiments of the disclosure;
FIG. 7 is a partial cross-sectional view illustrating a coupling structure of a shaft and a wing structure according to various embodiments of the disclosure;
FIG. 8a to FIG. 8d are views illustrating a sequence in which a wing structure is coupled to a shaft according to various embodiments of the disclosure;
FIG. 9 is a view illustrating an operation of wing structures coupled to shafts according to various embodiments of the disclosure; and
FIG. 10a and FIG. 10b are views illustrating a configuration of a protective structure according to various embodiments of the disclosure.

### [Mode for the Invention]

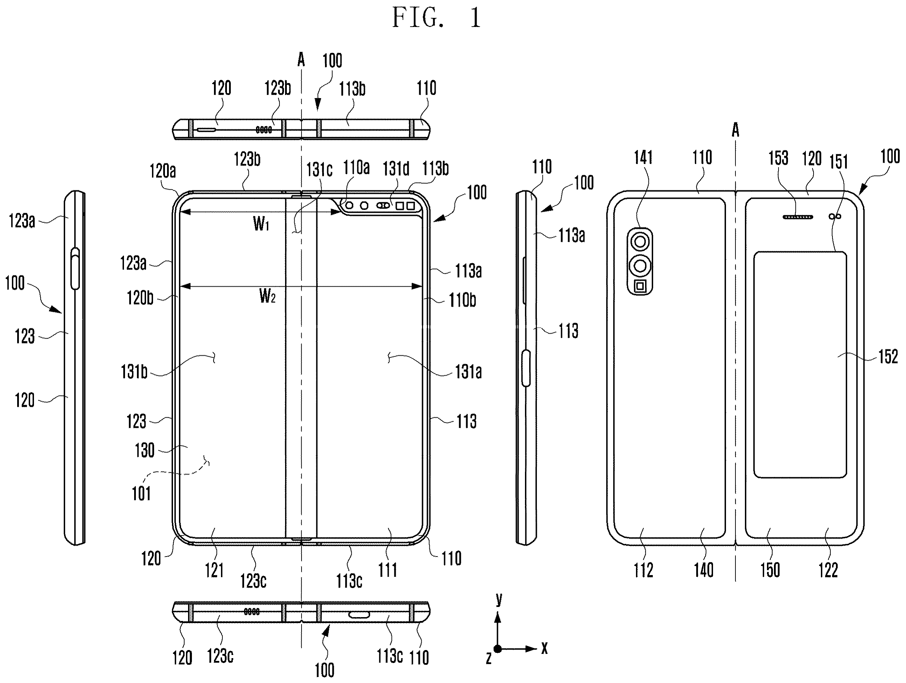

FIG. 1 is a diagram illustrating an unfolded state of an electronic device according to an embodiment of the disclosure.

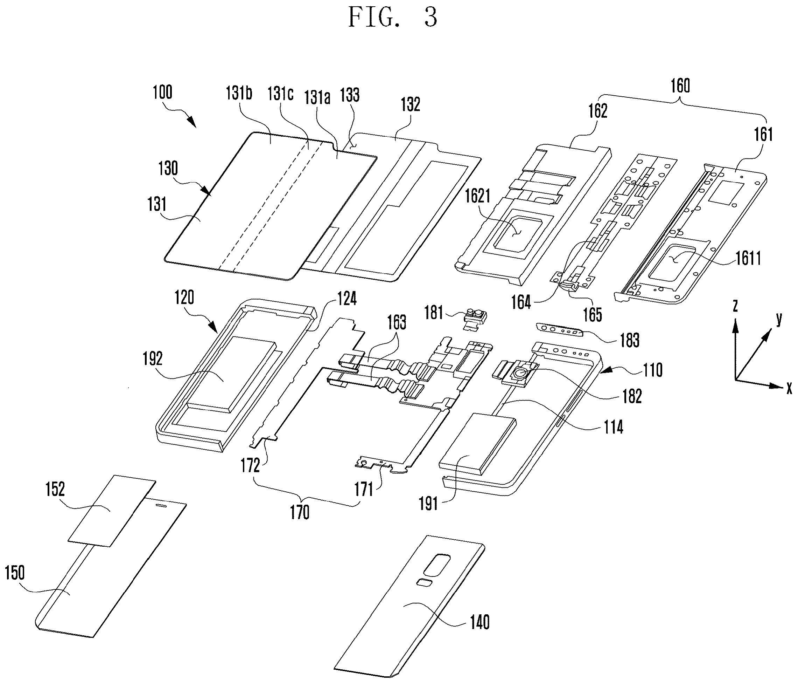

Referring to FIG. 1, an electronic device 100 may include a pair of housing structures 110 and 120 rotatably coupled via a hinge structure (e.g., hinge structure 164 in FIG. 3) to be folded relative to each other, a hinge cover 165 covering the foldable portion of the pair of housing structures 110 and 120, and a display 130 (e.g., flexible display or foldable display) disposed in the space formed by the pair of housing structures 110 and 120. In the description, the surface on which the display 130 is disposed may be referred to as the front surface of the electronic device 100, and the opposite side of the front surface may be referred to as the rear surface of the electronic device 100. The surface surrounding the space between the front surface and the rear surface may be referred to as the side surface of the electronic device 100.

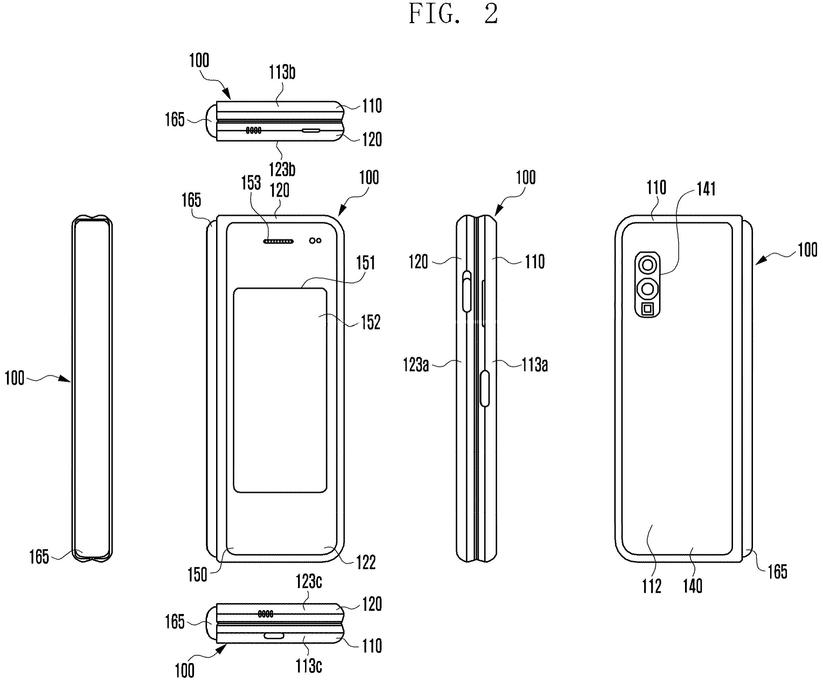

In one embodiment, the pair of housing structures 110 and 120 may include a first housing structure 110 including a sensor region 131d, a second housing structure 120, a first rear cover 140, and a second rear cover 150. The pair of housing structures 110 and 120 of the electronic device 100 are not limited to the shape or combination illustrated in FIGS. 1 and 2, but may be implemented in various shapes or combinations. For example, in another embodiment, the first housing structure 110 and the first rear cover 140 may be formed as a single body, and the second housing structure 120 and the second rear cover 150 may be formed as a single body.

In one embodiment, the first housing structure 110 and the second housing structure 120 may be disposed at both sides with respect to the folding axis (A) and may be substantially symmetrical with respect to the folding axis (A). In one embodiment, the angle or distance between the first housing structure 110 and the second housing structure 120 may vary depending upon whether the electronic device 100 is in the flat state or closed state, the folded state, or the intermediate state. In one embodiment, the first housing structure 110 includes the sensor region 131d where various sensors are disposed, but may have a symmetrical shape with the second housing structure 120 in other regions. In another embodiment, the sensor region 131d may be disposed in a specific region of the second housing structure 120 or may be replaced.

In one embodiment, during the flat state of the electronic device 100, the first housing structure 110 may be connected to the hinge structure (e.g., hinge structure 164 in FIG. 3), and may include a first surface 111 facing the front surface of the electronic device 100, a second surface 112 facing away from the first surface 111, and a first side member 113 enclosing at least a portion of the space between the first surface 111 and the second surface 112. In one embodiment, the first side member 113 may include a first side surface 113a disposed in parallel with the folding axis (A), a second side surface 113b extending from one end of the first side surface 113a in a direction perpendicular to the folding axis, and a third side surface 113c extending from the other end of the first side surface 113a in a direction perpendicular to the folding axis.

In one embodiment, during the flat state of the electronic device 100, the second housing structure 120 may be connected to the hinge structure (e.g., hinge structure 164 in FIG. 3), and may include a third surface 121 facing the front surface of the electronic device 100, a fourth surface 122 facing away from the third surface 121, and a second side member 123 enclosing at least a portion of the space between the third surface 121 and the fourth surface 122. In one embodiment, the second side member 123 may include a fourth side surface 123a disposed in parallel with the folding axis (A), a fifth side surface 123b extending from one end of the fourth side surface 123a in a direction perpendicular to the folding axis, and a sixth side surface 123c extending from the other end of the fourth side surface 123a in a direction perpendicular to the folding axis. In one embodiment, the third surface 121 may face the first surface 111 in the folded state.

In one embodiment, the electronic device 100 may include a recess 101 formed to accommodate the display 130 through a structural combination of the shapes of the first housing structure 110 and the second housing structure 120. The recess 101 may have substantially the same size as the display 130. In one embodiment, the recess 101 may have two or more different widths in a direction perpendicular to the folding axis (A) due to the sensor region 131d. For example, the recess 101 may have a first width (W1) between a first portion 120a of the second housing structure 120 parallel to the folding axis (A) and a first portion 110a of the first housing structure 110 formed at the edge of the sensor region 131d, and have a second width (W2) between a second portion 120b of the second housing structure 120 and a second portion 110b of the first housing structure 110 that does not correspond to the sensor region 113d and is parallel to the folding axis (A). Here, the second width (W2) may be wider than the first width (W1). In other words, the recess 101 may be formed to have the first width (W1) ranging from the first portion 110a of the first housing structure 110 to the first portion 120a of the second housing structure 120 (asymmetric shape), and the second width (W2) ranging from the second portion 110b of the first housing structure 110 to the second portion 120b of the second housing structure 120 (symmetric shape). In one embodiment, the first portion 110a and the second portion 110b of the first housing structure 110 may be located at different distances from the folding axis (A). The width of the recess 101 is not limited to the example shown above. In various embodiments, the recess 101 may have two or more different widths owing to the shape of the sensor region 113d or the asymmetry of the first housing structure 110 or the second housing structure 120.

In one embodiment, at least a portion of the first housing structure 110 and the second housing structure 120 may be made of a metal or non-metal material having a rigidity value selected to support the display 130.

In one embodiment, the sensor region 131d may be formed to have a preset area near to one corner of the first housing structure 110. However, the arrangement, shape, or size of the sensor region 131d is not limited to the illustrated example. For example, in a certain embodiment, the sensor region 131d may be formed at another corner of the first housing structure 110 or in any region between the upper corner and the lower corner. In another embodiment, the sensor region 131d may be disposed at a portion of the second housing structure 120. In another embodiment, the sensor region 131d may be formed to extend between the first housing structure 110 and the second housing structure 120. In one embodiment, to perform various functions, the electronic device 100 may include components exposed to the front surface of the electronic device 100 through the sensor region 113d or through one or more openings provided in the sensor region 131d. The components may include, for example, at least one of a front camera, a receiver, a proximity sensor, an illuminance sensor, an iris recognition sensor, an ultrasonic sensor, or an indicator.

In one embodiment, the first rear cover 140 may be disposed on the second surface 112 of the first housing structure 110 and may have a substantially rectangular periphery. In one embodiment, at least a portion of the periphery may be wrapped by the first housing structure 110. Similarly, the second rear cover 150 may be disposed on the fourth surface 122 of the second housing structure 120, and at least a portion of the periphery thereof may be wrapped by the second housing structure 120.

In the illustrated embodiment, the first rear cover 140 and the second rear cover 150 may have a substantially symmetrical shape with respect to the folding axis (A). In another embodiment, the first rear cover 140 and the second rear cover 150 may have various different shapes. In another embodiment, the first rear cover 140 may be formed as a single body with the first housing structure 110, and the second rear cover 150 may be formed as a single body with the second housing structure 120.

In one embodiment, the first rear cover 140, the second rear cover 150, the first housing structure 110, and the second housing structure 120 may be combined with each other so as to provide a space where various components (e.g., printed circuit board, antenna module, sensor module, and battery) of the electronic device 100 can be arranged. In one embodiment, one or more components may be disposed on or visually exposed via the rear surface of the electronic device 100. For example, one or more components or sensors may be visually exposed through the first rear region 141 of the first rear cover 140. The sensors may include a proximity sensor, a rear camera, and/or a flash. In another embodiment, at least a portion of the sub-display 152 may be visually exposed through the second rear region 151 of the second rear cover 150.

The display 130 may be disposed on the space formed by the pair of housing structures 110 and 120. For example, the display 130 may be seated in the recess (e.g., recess 101 in FIG. 1) formed by the pair of housing structures 110 and 120, and may be disposed to substantially occupy most of the front surface of the electronic device 100. Hence, the front surface of the electronic device 100 may include the display 130, a portion (e.g., edge region) of the first housing structure 110 close to the display 130, and a portion (e.g. edge region) of the second housing structure 120 close to the display 130. In one embodiment, the rear surface of the electronic device 100 may include the first rear cover 140, a portion (e.g., edge region) of the first housing structure 110 close to the first rear cover 140, the second rear cover 150, and a portion (e.g. edge region) of the second housing structure 120 close to the second rear cover 150.

In one embodiment, the display 130 may refer to a display in which at least a portion may be deformed into a flat or curved surface. In one embodiment, the display 130 may include a folding region 131c, a first region 131a disposed on one side (e.g., right side of the folding region 131c) with respect to the folding region 131c, and a second region 131b disposed on the other side (e.g., left side of the folding region 131c). For example, the first region 131a may be disposed on the first surface 111 of the first housing structure 110, and the second region 131b may be disposed on the third surface 121 of the second housing structure 120. This demarcation of the display 130 is only an example, and the display 130 may be subdivided into plural regions (e.g., four or more regions) according to the structure or functionality. For example, in the embodiment of FIG. 1, the area of the display 130 may be subdivided with respect to the folding region 131c or the folding axis (A) extending parallel to the y-axis. However, in another embodiment, the area of the display 130 may be subdivided with respect to a different folding region (e.g., folding region parallel to the x-axis) or a different folding axis (e.g., folding axis parallel to the x-axis). The aforementioned subdivision of the display is only a physical demarcation based on the pair of housing structures 110 and 120 and the hinge structure (e.g., hinge structure 164 in FIG. 3), and the display 130 may substantially present one full screen through the pair of housing structures 110 and 120 and the hinge structure (e.g., hinge structure 164 in FIG. 3). In one embodiment, the first region 131a and the second region 131b may have a symmetrical shape with respect to the folding region 131c. Although the first region 131a may include a notch region (e.g., notch region 133 in FIG. 3) cut according to the presence of the sensor region 131d, the first region 131a may have a symmetrical shape with the second region 131b in other portions. In other words, the first region 131a and the second region 131b may include portions with symmetrical shapes and portions with asymmetrical shapes.

FIG. 2 is a diagram illustrating a folded state of the electronic device of FIG. 1 according to an embodiment of the disclosure.

Referring to FIG. 2, the hinge cover 165 may be disposed between the first housing structure 110 and the second housing structure 120 so as to cover the internal components (e.g., hinge structure 164 in FIG. 3). In one embodiment, the hinge cover 165 may be covered by portions of the first housing structure 110 and the second housing structure 120 or be exposed to the outside according to the operating state (e.g., flat state or folded state) of the electronic device 100.

For example, when the electronic device 100 is in the flat state as illustrated in FIG. 1, the hinge cover 165 may be covered by the first housing structure 110 and the second housing structure 120 so as not to be exposed. When the electronic device 100 is in the folded state (e.g., completely folded state) as illustrated in FIG. 2, the hinge cover 165 may be exposed to the outside between the first housing structure 110 and the second housing structure 120. When the electronic device 100 is in the intermediate state where the first housing structure 110 and the second housing structure 120 make a certain angle, the hinge cover 165 may be partially exposed to the outside between the first housing structure 110 and the second housing structure 120. In this case, the exposed portion may be less than that for the fully folded state. In one embodiment, the hinge cover 165 may include a curved surface.

Next, a description is given of configurations of the first housing structure 110 and the second housing structure 120 and regions of the display 130 according to the operating state (e.g. flat state or folded state) of the electronic device 100.

In one embodiment, when the electronic device 100 is in the flat state (e.g., state of FIG. 1), the first housing structure 110 and the second housing structure 120 may make an angle of 180 degrees, and the first region 131a and the second region 131b of the display may be disposed to face in the same direction. In addition, the folding region 131c may be coplanar with the first region 131a and the second region 131b.

In one embodiment, when the electronic device 100 is in the folded state (e.g., state of FIG. 2), the first housing structure 110 and the second housing structure 120 may be disposed to face each other. The first region 131a and the second region 131b of the display 130 may face each other, making a narrow angle (e.g., between 0 degrees and 10 degrees). At least a portion of the folding region 131c may form a curved surface with a preset curvature.

In one embodiment, when the electronic device 100 is in the intermediate state, the first housing structure 110 and the second housing structure 120 may be disposed to make a certain angle. The first region 131a and the second region 131b of the display 130 may form an angle greater than that for the folded state and less than that for the flat state. At least a portion of the folding region 131c may form a curved surface with a preset curvature. This curvature may be less than that for the folded state.

FIG. 3 is an exploded perspective view of an electronic device according to an embodiment of the disclosure.

Referring to FIG. 3, in one embodiment, the electronic device 100 may include a display 130, a support member assembly 160, at least one printed circuit board 170, a first housing structure 110, a second housing structure 120, a first rear cover 140, and a second rear cover 150. In the description, the display 130 may be referred to as a display unit, display module, or display assembly.

The display 130 may include a display panel 131 (e.g., flexible display panel), and at least one plate 132 or layer on which the display panel 131 is seated. In one embodiment, one or more plates 132 may include a conductive plate (e.g., Cu sheet or SUS sheet) disposed between the display panel 131 and the support member assembly 160. According to one embodiment, the conductive plate may be formed to have substantially the same area as that of the display, and an area facing a folding area of the display may be formed to be bendable. The plate 132 may include at least one subsidiary material layer (e.g., graphite member) disposed at a rear surface of the display panel 131. In one embodiment, the plate 132 may be formed in a shape corresponding to the display panel 131. For example, a partial area of the first plate 132 may be formed in a shape corresponding to the notch area 133 of the display panel 131.

The support member assembly 160 may include a first support member 161, a second support member 162, a hinge structure 164 disposed between the first support member 161 and the second support member 162, a hinge cover 165 to cover the hinge structure 164 when viewed from the outside, and a wiring member 163 (e.g., flexible printed circuit board (FPCB)) that crosses the first support member 161 and the second support member 162.

In one embodiment, the support member assembly 160 may be disposed between the plate 132 and at least one printed circuit board 170. For example, the first support member 161 may be disposed between the first region 131a of the display 130 and the first printed circuit board 171. The second support member 162 may be disposed between the second region 131b of the display 130 and the second printed circuit board 172.

In one embodiment, at least a portion of the wiring member 163 and the hinge structure 164 may be disposed within the support member assembly 160. The wiring member 163 may be disposed in a direction crossing the first support member 161 and the second support member 162 (e.g., x-axis direction). The wiring member 163 may be disposed in a direction (e.g., x-axis direction) perpendicular to the folding axis (e.g., y-axis or folding axis (A) in FIG. 2) of the folding region 131c.

The at least one printed circuit board 170 may include, as described above, the first printed circuit board 171 disposed on the side of the first support member 161, and the second printed circuit board 172 disposed on the side of the second support member 162. The first printed circuit board 171 and the second printed circuit board 172 may be disposed inside the space formed by the support member assembly 160, the first housing structure 110, the second housing structure 120, the first rear cover 140, and the second rear cover 150. Various components for implementing functions of the electronic device 100 may be mounted on the first printed circuit board 171 and the second printed circuit board 172.

In an embodiment, a first space of the first housing structure 110 may include a first printed circuit board 171 disposed in a space formed through the first support member 161, a first battery 191 disposed at a position facing a first swelling hole 1611 of the first support member 161, at least one sensor module 181, or at least one camera module 182. The first housing structure 110 may include a window glass 183 disposed to protect at least one sensor module 181 and at least one camera module 182 at a position corresponding to the notch area 133 of the display 130. In one embodiment, the second space of the second housing structure 120 may include a second printed circuit board 172 disposed in a second space formed through the second support member 162 and a second battery 192 disposed at a position facing the second swelling hole 1621 of the second support member 162. According to one embodiment, the first housing structure 110 and the first support member 161 may be integrally formed. According to one embodiment, the second housing structure 120 and the second support member 162 may also be integrally formed. According to an embodiment, a sub display 152 may be disposed in the second space of the second housing structure 120. According to an embodiment, the sub display 152 (e.g., the second display) may be disposed to be visible from the outside through at least a partial area of the second rear cover 150.

In one embodiment, the first housing structure 110 may include a first rotary support surface 114, and the second housing structure 120 may include a second rotary support surface 124 corresponding to the first rotary support surface 114. The first rotary support surface 114 and the second rotary support surface 124 may include a curved surface corresponding to the curved surface included in the hinge cover 165.

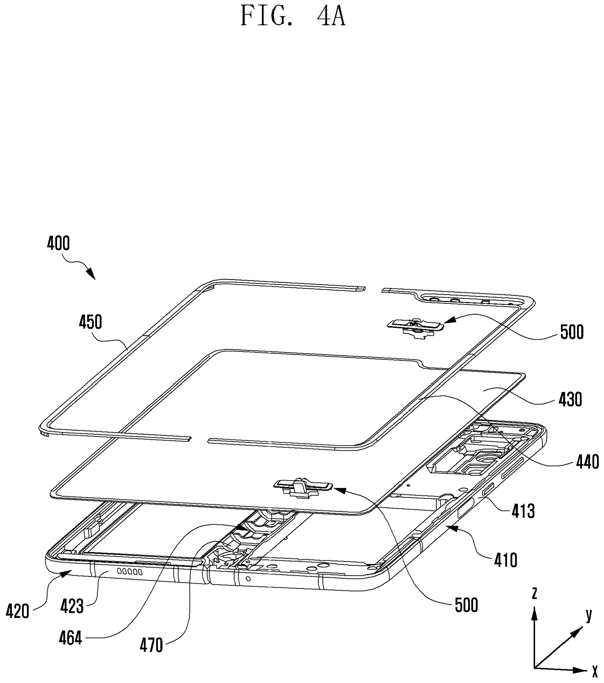

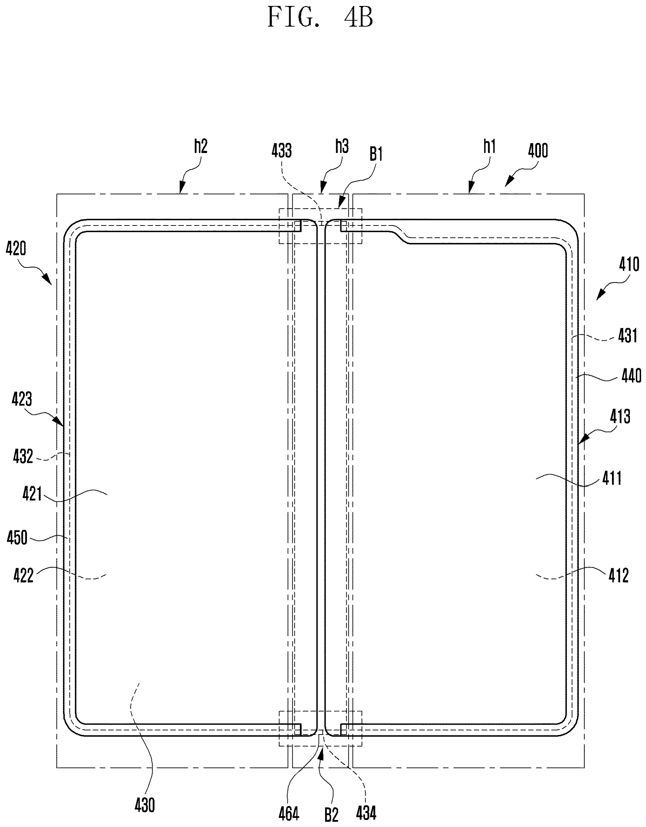

FIG. 4a is an exploded perspective view of an electronic device 400 including a protective structure 500 according to various embodiments of the disclosure. FIG. 4b is a view illustrating a configuration of each region of an electronic device 400 according to various embodiments of the disclosure.

The electronic device 400 of FIG. 4a and FIG. 4b may be at least partially similar to an electronic device 100 of FIG. 1, or further include other embodiments of an electronic device.

Referring to FIG. 4a and FIG. 4b, the electronic device 400 (e.g., the electronic device 100 of FIG. 1) may include a first housing 410 (e.g., a first housing structure 110 of FIG. 1) including a first surface 411 (e.g., a first surface 111 of FIG. 1), a second surface 412 (e.g., a second surface 112 of FIG. 1) oriented to a direction opposite to the first surface 411, and a first side surface member 413 (e.g., a first side surface member 113 of FIG. 1) configured to surround a first space between the first surface 411 and the second surface 412. According to an embodiment, in an unfolded state, the electronic device 400 may include a second housing 420 (e.g., a second housing structure 120 of FIG. 1) including a third surface 421 (e.g., a third surface 121 of FIG. 1) oriented in the same direction as that of the first surface 411, a fourth surface 422 (e.g., a fourth surface 122 of FIG. 1) oriented to a direction identical to the second surface 412, and a second side surface member 423 (e.g., a second side surface member 123 of FIG. 1) configured to surround a second space between the third surface 421 and the fourth surface 422. According to an embodiment, the first housing 410 and the second housing 420 may be installed to be rotatable to each other via a hinge module 464 (e.g., a hinge structure 164 of FIG. 3). For example, the hinge module 464 may operate the first housing 410 and the second housing 420 in a direction in which the first housing and the second housing are folded or unfolded with respect to each other, via at least one hinge device (not shown) included in a hinge housing 470. According to an embodiment, the first surface 411 and the third surface 421 of the electronic device 400 may face each other in a folded state, and the first surface 411 and the third surface 421 may be oriented to the same direction in an unfolded state. According to an embodiment, the electronic device 400 may include a display 430 (e.g., a flexible display 130 of FIG. 1) disposed to at least partially cross the first surface 411 and the third surface 421. According to an embodiment, the display 430 may be disposed to be supported by at least a partial region of the first housing 410, the hinge module 464, and the second housing 420.

According to various embodiments, the electronic device 400 (e.g., the electronic device 100 of FIG. 1) may include a first region h1 facing the first housing 410, a second region h2 facing the second housing 420, and a folding region h3 facing the hinge module 464. According to an embodiment, in the electronic device 400, the first housing 410 corresponding to the first region h1 may operate in a folded or unfolded state with respect to the second housing 420 corresponding to the second region h2 via the hinge module 464 corresponding to the folding region h3.

According to various embodiments, the electronic device 400 may include at least one protective frame 440 and 450 (e.g., a decoration member) disposed on the display 430. According to an embodiment, the at least one protective frame 440 and 450 may include a first protective frame 440 disposed in the first region h1 and a second protective frame 450 disposed in the second region h2. According to an embodiment, the first protective frame 440 may be disposed on the display 430 in the first region h1. For example, the display 430 may be disposed between the first protective frame 440 and the first housing 410 so as to prevent a first edge 431 corresponding to the first region h1 from being exposed to the outside. According to an embodiment, the second protective frame 450 may be disposed on the display 430 in the second region h2. For example, the display 430 may be disposed between the second protective frame 450 and the second housing 420 so as to prevent a second edge 432 corresponding to the second region h2 from being exposed to the outside. According to an embodiment, the protective frames 440 and 450 may be made of a polymer material or a metal material, and be arranged on each of the housing structures 410 and 420 via at least one coupling manner among bonding, taping, fusion, or structural coupling.

According to various embodiments, a pair of protective frames 440 and 450 may be omitted in the folding region h3 corresponding to the hinge module 464, for a folding operation of the first housing 410 and the second housing 420 with reference to the hinge module 464. According to an embodiment, the electronic device 400 may include, in the folding region h3, protective structures 500 disposed to protect a third edge 433 and a fourth edge 434 of the display 430 exposed to the outside. According to an embodiment, the third edge 433 and the fourth edge 434 of the display 430 may be blocked via the protective structures 500, not to be at least partially viewed from the outside.

According to various embodiments, the protective structures 500 may be arranged in the first blocking region B1, which is one end of the hinge module 464 in the folding region h3, and the second blocking region B2, which is the other end of the hinge module 464, so as to protect the exposed third edge 433 and the exposed fourth edge 434, respectively. Hereinafter, a more detailed description on the protective structures 500 will be given. The protective structures 500 arranged in the respective blocking regions (B1, B2) have substantially the same configuration, and thus in the following descriptions, the protective structure 500 disposed in the first blocking region B1 will be illustrated and described in detail, and the description for the configuration of the protective structure 500 disposed in the second blocking region B1 may be omitted.

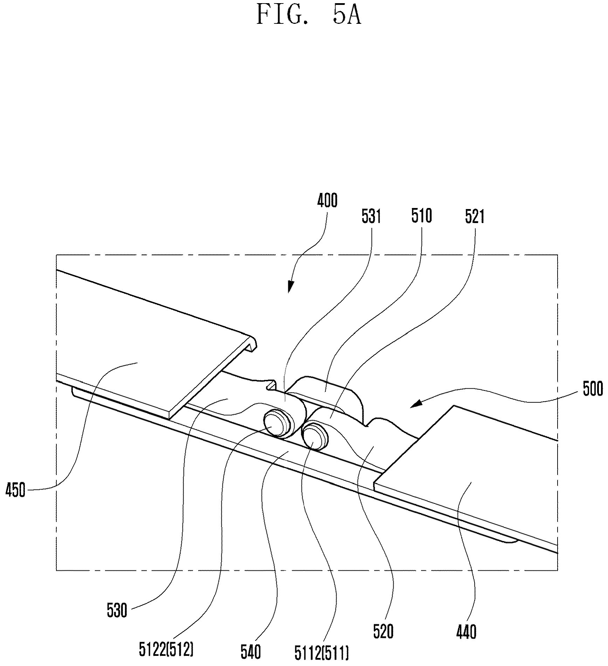

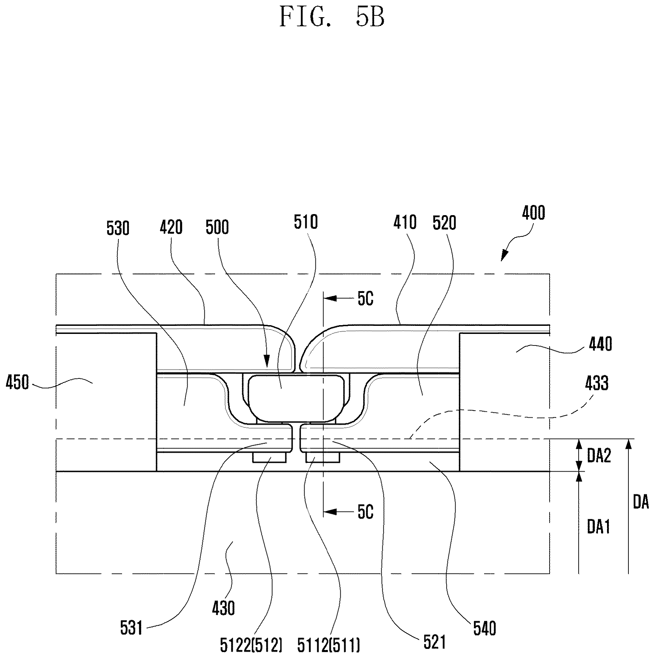

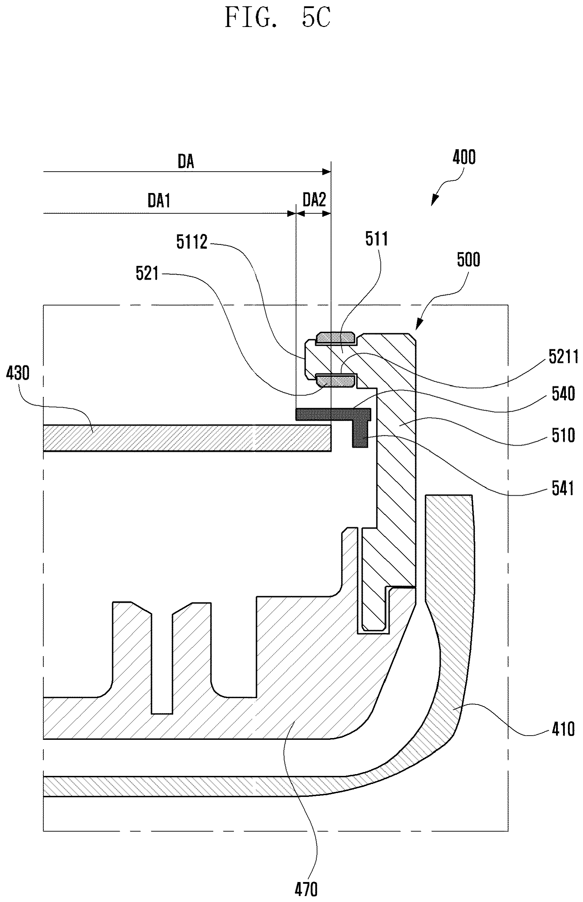

FIG. 5a is a perspective view illustrating a first blocking region B1 of FIG. 4b, which is a part of the electronic device 400 including a protective structure 500 according to various embodiments of the disclosure. FIG. 5b is a plan perspective view illustrating the first blocking region B1 of FIG. 4b, which is a part of the electronic device 400 including a protective structure 500 according to various embodiments of the disclosure. FIG. 5c is a partial cross-sectional view of the electronic device 400 taken along line 5c-5c of FIG. 5b according to various embodiments of the disclosure.

Referring to FIG. 5a to FIG. 5c, the electronic device 400 may include the protective structure 500 disposed to cover the third edge 433 of the display 430 in the folding region (e.g., the folding region h3 of FIG. 4b) of the display 430. According to an embodiment, the protective structure 500 may include a support body 510 fixed to the hinge module (e.g., the hinge module 464 of FIG. 4b), a pair of wing structures 520 and 530 arranged to be rotatable to the support body 510, and blocking members 540 supported by the pair of wing structures 520 and 530 and disposed to be bendable. According to an embodiment, the pair of wing structures 520 and 530 may be rotatably coupled to the support body 510 via a pair of shafts 511 and 512 arranged to protrude from the support body 510 toward the display 430. The pair of wing structures 511 and 512 may be coupled to the support body 510 in a manner in which the pair of shafts 511 and 512 extend through the hinge arms 521 and 531 of ends of the wing structures, respectively. The pair of shafts 511 and 512 may include engaging parts 5112 and 5122 arranged at the ends of the shafts and having a diameter greater than that of the shafts, and thus the coupled pair of wing structures 520 and 530 can be prevented from being separated from the support body. According to an embodiment, the pair of wing structures 520 and 530 may include a first wing structure 520 configured to extend toward the first housing 410 and a second wing structure 530 configured to extend toward the second housing 420. According to an embodiment, at least a portion of the first wing structure 520 may extend by a predetermined length between the first edge (e.g., the first edge 431 of FIG. 4b) of the display 430 and the first protective frame 440. According to an embodiment, at least a portion of the second wing structure 530 may extend by a predetermined length between the second edge (e.g., the second edge 432 of FIG. 4b) of the display 430 and the second protective frame 450.

According to various embodiments, the blocking members 540 may include film members made of a polymer material such as polyurethane (PU) or thermoplastic polyurethane (TPU). As another embodiment, the blocking members 540 may include thin metal plates. In an embodiment, the blocking members 540 may include a first blocking member fixed to the first wing structure 520 and a second blocking member fixed to the second wing structure 530 together. The first blocking member and the second blocking member may be arranged and connected seamlessly. According to an embodiment, the blocking members 540 may be supported by at least a portion of the pair of wing structures 520 and 530 and thus may be arranged to cover the third edge 433 on the display 430 and connect the first protective frame 440 and the second protective frame 450. For example, the blocking members 540 may connect the first protective frame 440 and the second protective frame 450 and block the third edge 433 of the display 430 exposed in the folding region (e.g., the folding region h3 of FIG. 4) not to be viewed from the outside, thereby preventing the display 430 from being damaged by an arbitrary operation of the third edge 433.

According to various embodiments, the blocking members 540 may be arranged to overlap a deactivated area DA2 in a display area DA, when the display 430 is viewed from above. In an embodiment, the blocking members 540 may include a deactivated area DA2 in the display area DA and be arranged to overlap at least a portion of an activated area DA1, when the display 430 is viewed from above. According to an embodiment, the blocking members 540 may be arranged on the same line as the first protective frame 440 and the second protective frame 450, when the display 430 is viewed from above. According to an embodiment, the support member 510 and/or the pair of wing structures 520 and 530 may be made of a metal material. In an embodiment, the support member 510 and/or the pair of wing structures 520 and 530 may be made of a polymer material. In an embodiment, the support member 510 and/or the pair of wing structures 520 and 530 may be made by injecting a polymer material into a metal material.

According to various embodiments, the support member 510 may be coupled to the hinge housing 470 of the hinge module (e.g., the hinge module 464 of FIG. 4a), and include a pair of shafts 511 and 512 protruding toward the display at a position higher than that of the display 430. According to an embodiment, the protective structure 500 may include the pair of wing structures 520 and 530 rotatably coupled to the pair of shafts 511 and 512, and include an improved coupling structure configured to couple the pair of shafts 511 and 512 and the pair of wing structures 520 and 530. According to an embodiment, the support member 510 and the improved coupling structure of the support member 510 and the pair of wing structures 520 and 530 may help improve assembly and productivity of the electronic device.

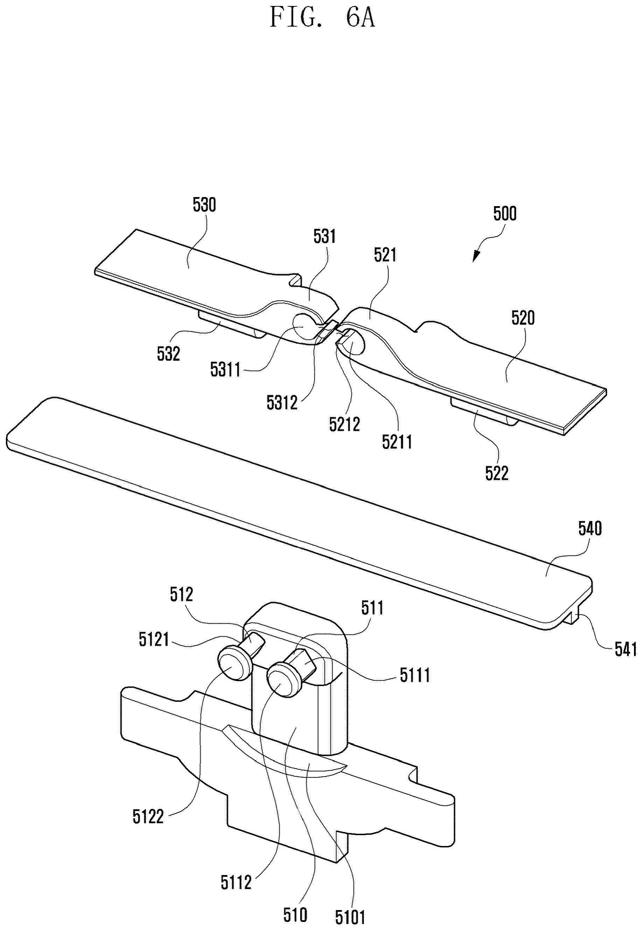

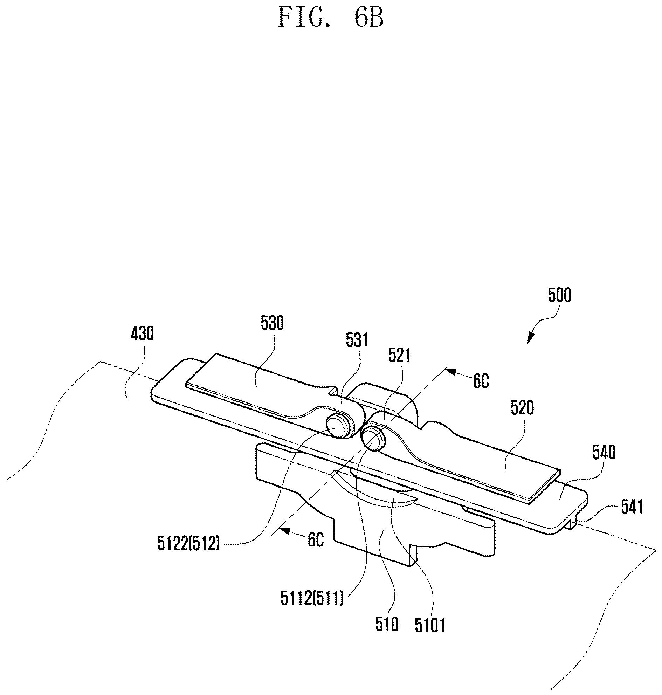

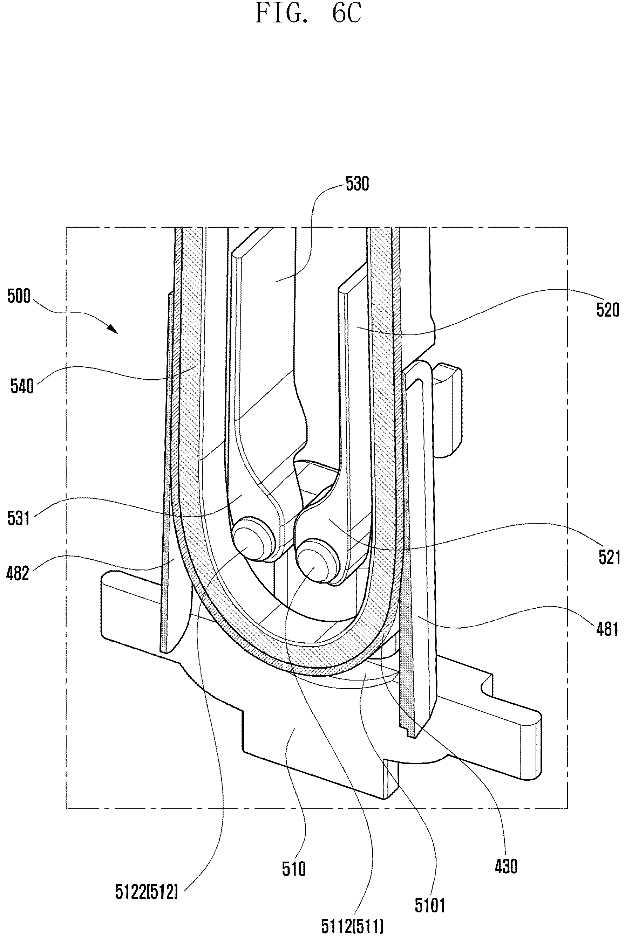

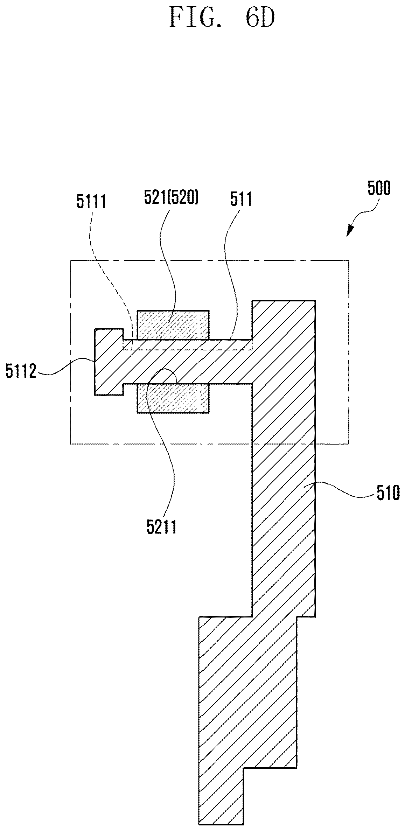

FIG. 6a is an exploded perspective view of a protective structure 500 according to various embodiments of the disclosure. FIG. 6b is a perspective view of a coupled protective structure 400 when an electronic device 400 is in an unfolded state (e.g., the state of FIG. 1), according to various embodiments of the disclosure. FIG. 6c is a perspective view of a coupled protective structure 500 when an electronic device 400 is in a folded state (e.g., the state of FIG. 2), according to various embodiments of the disclosure. FIG. 6d is a partial cross-sectional view of the protective structure 500 taken along line 6c-6c of FIG. 6b according to various embodiments of the disclosure.

Referring to FIG. 6a to FIG. 6d, a protective structure 500 may include a support member 510 and a pair of wing structures 520 and 530 rotatably coupled to the support member 510. According to an embodiment, the support member 510 may include a pair of shafts 511 and 512 spaced apart from each other by a predetermined interval and protruding toward the display from one end of the support member. According to an embodiment, the pair of wing structures 520 and 530 may include a first wing structure 520 rotatably coupled to a first shaft 511 of the pair of shafts 511 and 512 and a second wing structure 530 rotatably coupled to a second shaft 512. According to an embodiment, the first wing structure 520 may include a first hinge arm 521 including a first through hole 5211 configured to rotatably receive the first shaft 511. According to an embodiment, the first through hole 5211 may include a first opening 5212 having a predetermined opening width and connected to the exterior thereof. According to an embodiment, the second wing structure 530 may include a second hinge arm 531 including a second through hole 5311 configured to rotatably receive the second shaft 512. According to an embodiment, the second through hole 5311 may include a second opening 5312 having a predetermined opening width and connected to the exterior thereof. For example, the coupling structure in which the first wing structure 520 is coupled to the first shaft 511 may be substantially the same as the coupling structure in which the second wing structure 530 is coupled to the second shaft 512. According to an embodiment, the pair of wing structures 520 and 530 may include engaging pieces 522 and 532 arranged thereunder and protruding downward so as to support or fix at least one member material (e.g., Poron, sponge, and/or tapes). According to an embodiment, the blocking members 540 may include catching protrusions 541 configured to support the edge of the display.

According to various embodiments, the first shaft 511 may include at least one first cutting part 5111 (e.g., D cutting part) which allows the first shaft 511 having a circular cross-section to be selectively received into the first through hole 5211 through the first opening 5212 at a predetermined angle (e.g., an angle except the rotational range of the first housing). According to an embodiment, the first cutting part 5111 may be disposed so as to have a predetermined cutting amount along the lengthwise direction of the first shaft 511. According to an embodiment, the second shaft 512 may include at least one second cutting part 5121 (e.g., D cutting part) which allows the second shaft 512 having a circular cross-section to be selectively received into the second through hole 5311 through the second opening 5312 at a predetermined angle (e.g., an angle except the rotational range of the second housing). According to an embodiment, the second cutting part 5121 may be disposed so as to have a predetermined cutting amount along the lengthwise direction of the second shaft 512. According to an embodiment, the support body 510 may include a guide recess 5101 disposed on a surface facing the display 430. According to an embodiment, the guide recess 5101 may guide or support to allow the display 430 to be folded in a predetermined curvature when the electronic device 400 is in a folded state, and thus induce smooth bending of the display 430.

According to an embodiment of the disclosure, the first shaft 511 including the first cutting part 5111 may be received in the first through hole 5211 through the first opening 5212 of the first through hole 5211 disposed through the first hinge arm 521, so as to allow the first wing structure 520 to be rotatably coupled to the support member 510, and the second shaft 512 including the first cutting part 5121 may be received in the second through hole 5311 through the second opening 5312 of the second through hole 5311 disposed through the second hinge arm 531, so as to allow the second wing structure 530 to be rotatably coupled to the support member 510. When the protective structure 500 is assembled to the electronic device, the first shaft 511 and the second shaft 512 may not be separated through the first opening 5212 and the second opening 5312. Therefore, the cutting positions of the pair of cutting parts 5111 and 5121 and/or the arrangement positions of the pair of openings 5212 and 5312 may be determined, after the protective structure 500 is assembled, based on the coupling structure in which the pair of wing structures 520 and 530 are not separated within the rotation angle range in which the electronic device 400 is folded and unfolded. According to an embodiment, the reference numerals "481" and "482" denoted in FIG. 6c may refer to a portion of support plates (e.g., a reinforcement plate, an SUS plate and/or a metal plate having a lattice structure) arranged in the inner space of the first housing 410 and the second housing 420 to support the rear surface of the display 430.

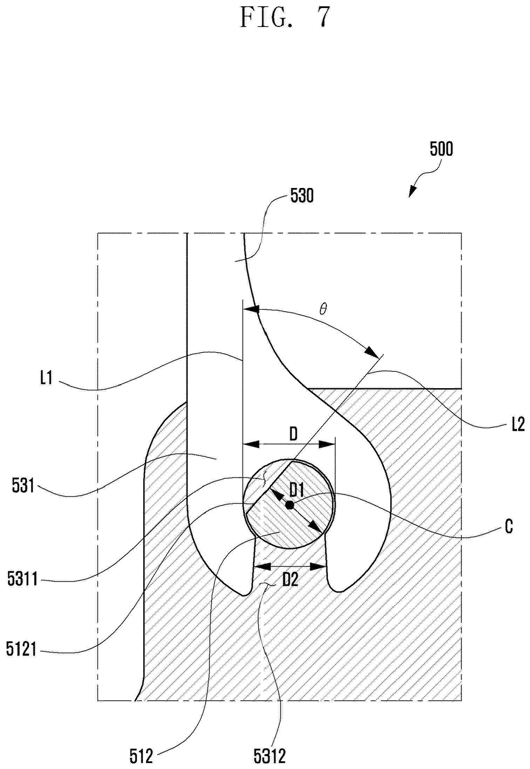

FIG. 7 is a partial cross-sectional view illustrating a coupling structure of a shaft 512 and a wing structure 530 according to various embodiments of the disclosure.

The coupling structure of the second shaft 512 of the support member 510 and the second wing structure 530 coupled thereto has been illustrated in FIG. 7, and the coupling structure of the first shaft 511 of the support member 510 and the first wing structure 520 coupled thereto may also be substantially the same.

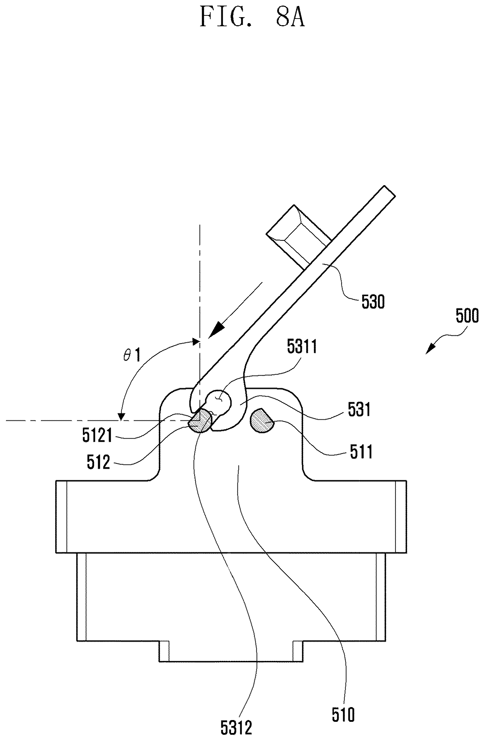

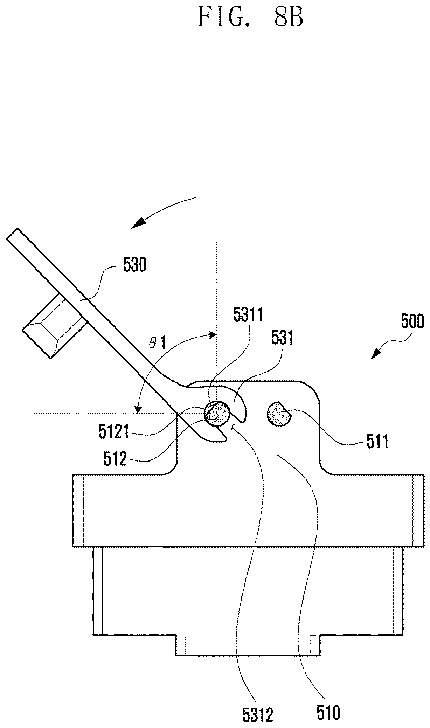

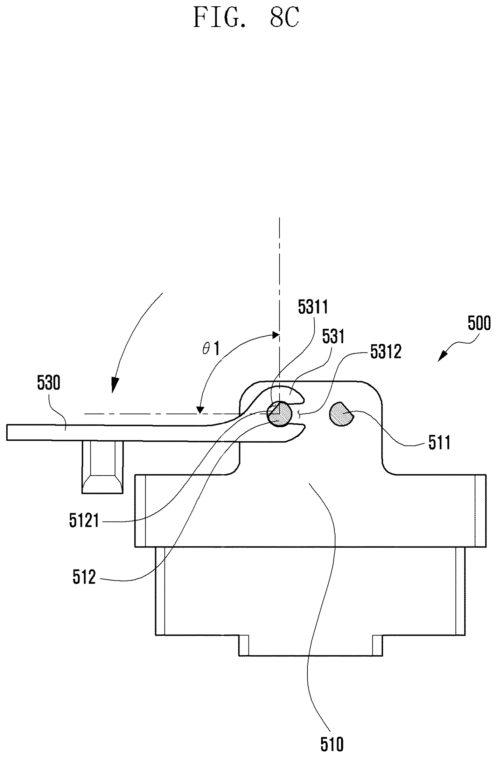

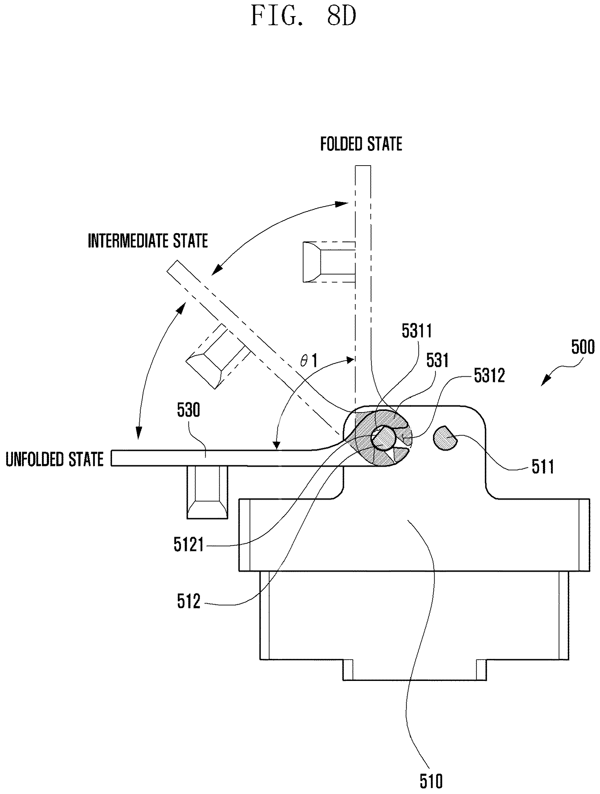

Referring to FIG. 7, when a horizontal cross-section of the second shaft 512 is viewed, the second through hole 5311 of the second wing structure 530 may be configured to have an inner diameter substantially similar to the first diameter D which passes the center C and does not include the cutting part 5121. According to an embodiment, when being received into the second through hole 5311, the second shaft 512 may be configured to have an allowance in which the second shaft 512 is rotatable with respect to the inner diameter of the second through hole 5311. According to an embodiment, when a horizontal cross-section of the second shaft 512 is viewed, a second diameter D1 which passes the center C and includes the second cutting part 5121 may be configured to be smaller than the first diameter D. According to an embodiment, the second opening 5312 may be configured to be the same as or greater than the second diameter D1, and be configured to have an opening width D2 smaller than the first diameter D. For example, the opening width D2 may be configured to have a size which is the same as or greater than the second diameter D1 and greater than the radius (D/2) of the first diameter D, according to a condition of D/2≤D1≤D2≤D. Therefore, the second shaft 512 may be assembled at an angle beyond the rotational angle (e.g., a rotational angle θ1 of FIG. 8a) of the second housing, and in a state of being completely assembled, may not be separated from the second opening 5312. According to an embodiment, the cutting angle θ of the second cutting part 5121, which is an angle θ between a line L2 of the cutting part 5121 and a normal line L1 that passes the point at which the cutting part 5121 starts and which a straight line perpendicular to a straight line passing the center C meets may include a range of 10°-45°.

FIG. 8a to FIG. 8d are views illustrating a sequence in which a wing structure 530 is coupled to a shaft 512 according to various embodiments of the disclosure.

Referring to FIG. 8a to FIG. 8d, the second wing structure 530 may be assembled to the second shaft 512 of the support member 510. The second wing structure 530 may be assembled to the second shaft 512 at an angle beyond the rotational angle θ1 of the second housing (e.g., the second housing 420 of FIG. 4b). For example, at an angle beyond the rotational angle θ1 of the second housing (e.g., the second housing 420 of FIG. 4b), in a manner where the opening width (e.g., the width D2 of FIG. 7) of the second opening 5312 of the second through hole 5311 disposed through the second hinge arm 531 and the second diameter (e.g., the second diameter D1 of FIG. 7) of the second shaft 512 face each other, the second shaft 512 may be received through the second opening 5312 into the second through hole 5311. According to an embodiment, in a state where the second shaft 512 is completely received into the second through hole 5311, when the second wing structure 530 is rotated within the range (e.g., an unfolded state, an intermediate state, and a folded state) of the rotational angle θ1 of the second housing (e.g., the second housing 420 of FIG. 4b), the second diameter (e.g., the second diameter D1 of FIG. 7) of the second shaft 512 may move to a position where the second diameter does not face the second opening 5312. According to an embodiment, the second wing structure 530 may operate only within the range of the rotational angle of the second housing (e.g., the second housing 420 of FIG. 4b), a case in which the second diameter (e.g., the second diameter D1 of FIG. 7) of the second shaft 512 faces the second opening 5312 does not exist, and thus the second wing structure 530 may not be separated from the second shaft 512.

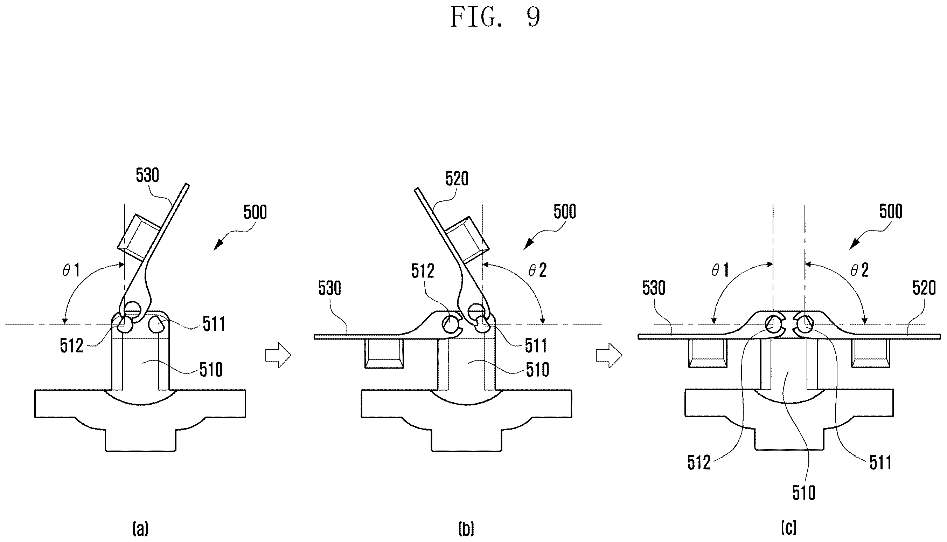

FIG. 9 is a view illustrating an operation of wing structures 520 and 530 coupled to shafts 511 and 512 according to various embodiments of the disclosure.

Referring to FIG. 9, the second wing structure 530 may be coupled to the second shaft 512 of the support member 510, so as to assemble the protective structure 500, as noted in figure (a) of FIG. 9. The second wing structure 530 may be coupled to the support member by allowing the second shaft 512 to be received into the second through hole of the second wing structure, at an angle beyond the rotational angle θ1 of the second housing (e.g., the second housing 420 of FIG. 4b). In figure (b) of FIG. 9, the first wing structure 520 may be coupled to the first shaft 511 of the support member 510. The first wing structure 520 may be coupled to the support member 510 by allowing the first shaft 511 to be received into the first through hole (e.g., the first through hole 5211 of FIG. 6a) of the first wing structure 520, at an angle beyond the rotational angle θ2 of the first housing (e.g., the first housing 410 of FIG. 4b). According to an embodiment, the first wing structure 520 may also have substantially the same coupling structure as the coupling structure of the second wing structure 530 illustrated in FIG. 8a to FIG. 8d. Therefore, the first wing structure 520 and the second wing structure 530, which are assembled to the first shaft 511 and the second shaft 512 of the support member 510, respectively, may perform a folding operation or an unfolding operation with respect to each other, within the rotational angle θ2 of the first housing (e.g., the first housing 410 of FIG. 4b) and the rotational angle θ1 of the second housing (e.g., the second housing 420 of FIG. 4b), and the first wing structure 520 and the second wing structure 530 may not be separated within respective rotational angles θ1 and θ2 via the assembly structure described above. In an embodiment, the assembly sequence of the first wing structure 520 and the second wing structure 530 may change with each other. In an embodiment, the rotational angle θ2 of the first housing (e.g., the first housing 410 of FIG. 4b) and the rotational angel θ1 of the second housing (e.g., the second housing 420 of FIG. 4b) may be substantially the same. In an embodiment, the rotational angle θ2 of the first housing (e.g., the first housing 410 of FIG. 4b) and the rotational angel θ1 of the second housing (e.g., the second housing 420 of FIG. 4b) may be different from each other.

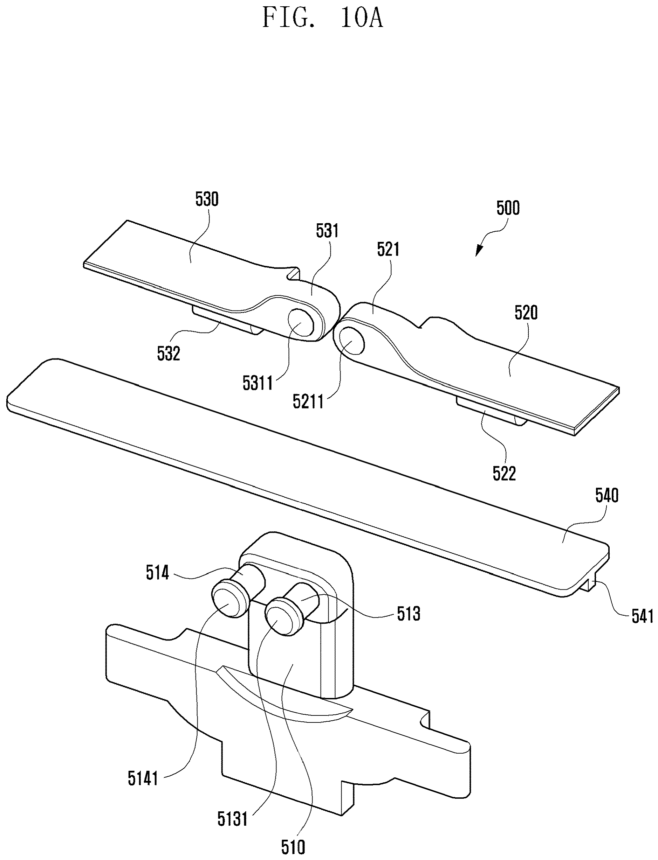

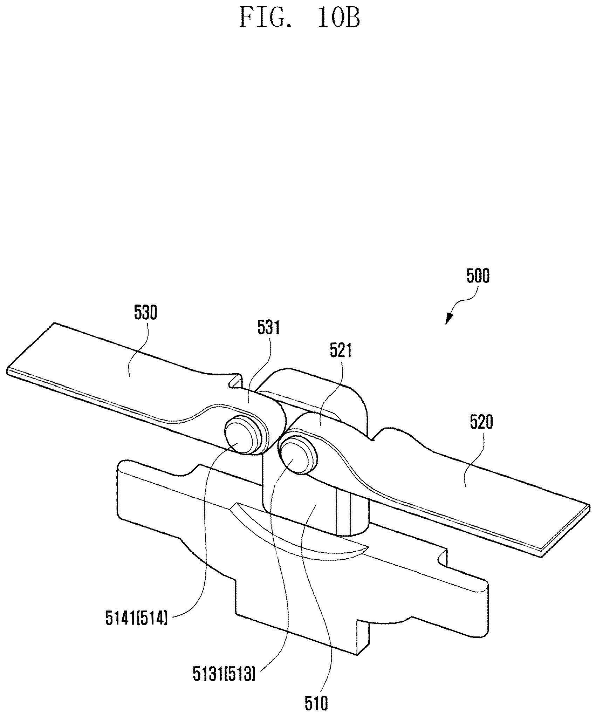

FIG. 10a and FIG. 10b are views illustrating a configuration of a protective structure 500 according to various embodiments of the disclosure.

In relation to the description of the protective structure 500 illustrated in FIG. 10a and FIG. 10b, the same reference numerals are used for substantially the same components as those of the protective structure 500 of FIG. 6a and FIG. 6b, and the detailed descriptions may be omitted.

Referring to FIG. 10a and FIG. 10b, each of a first shaft 513 and a second shaft 514 protruding from a support member 510 of the protective structure 500 may have a circular horizontal cross-section, and the protective structure 500 may include a first wing structure 520 and a second wing structure rotatably coupled to the shafts 513 and 514, respectively. According to an embodiment, the first wing structure 520 and the second wing structure may not be separated arbitrarily by engaging parts 5131 and 5141 arranged on ends of the shafts 513 and 514, respectively. The first wing structure 520 and the second wing structure 530 may be rotatably arranged integrally to the support member 510 without a separate assembly structure. For example, a pair of wing structures 520 and 530 and the support member 510 of the protective structure 500 may be coupled to each other and be configured via three-dimensional (3D) printing so as to remain flexible with respect to each other. In an embodiment, the first wing structure 520 and the second wing structure 530 may be coupled to the support member in a manner where the shafts 513 and 514 are forcibly fitted into through holes 5211 and 5311 via the engaging parts 5131 and 5141, respectively. At least the support member 510 may be made of a polymer material.

According to various embodiments, an electronic device (e.g., the electronic device 400 of FIG. 4a) may include: a hinge module (e.g., the hinge module 464 of FIG. 4a); a first housing (e.g., the first housing 410 of FIG. 4a) connected to the hinge module; a second housing (e.g., the second housing 420 of FIG. 4a) connected to the hinge module so as to be foldable with respect to the first housing; a display (e.g., the display 430 of FIG. 4a) disposed to be supported by at least a portion of the first housing and at least a portion of the second housing via the hinge module; and at least one protective structure (e.g., the protective structure 500 of FIG. 6a) which is disposed to protect the edge (e.g., the third edge 433 of FIG. 4b) of the display in a folding region (e.g., the folding region h3 of FIG. 4b) corresponding to the hinge module and includes a support body (e.g., the support body 510 of FIG. 6a) disposed on at least a portion of the hinge module and including a first shaft (e.g., the first shaft 511 of FIG. 6a) and a second shaft (e.g., the second shaft 512 of FIG. 6a) which are spaced a predetermined interval apart from each other and protrude therefrom, a first wing structure (e.g., the first wing structure 520 of FIG. 6a) including a first hinge arm (e.g., the first hinge arm 521 of FIG. 6a) including a first through hole (e.g., the first through hole 5211 of FIG. 6a) and rotatably coupled to the first shaft in a manner where the first shaft extends through the first through hole, and a second wing structure (e.g., the second wing structure 530 of FIG. 6a) including a second hinge arm (e.g., the second hinge arm 531 of FIG. 6a) including a second through hole (e.g., the second through hole 5311 of FIG. 6a) and rotatably coupled to the second shaft in a manner where the second shaft extends through the second through hole, wherein the first hinge arm may be rotatably coupled to the first shaft through a first opening at least partially formed in the first through hole, and the second hinge arm may be rotatably coupled to the second shaft through a second opening at least partially formed in the second through hole.

According to various embodiments, the first shaft may include a first cutting part partially cut in a lengthwise direction in a circular horizontal cross-sectional structure of the first shaft, and the second shaft may include a second cutting part partially cut in a lengthwise direction in a circular horizontal cross-sectional structure of the second shaft.

According to various embodiments, the first shaft and the second shaft may be configured to have a first diameter passing the center thereof and a second diameter passing the center and reaching the cutting parts in the horizontal cross-sectional structure.

According to various embodiments, the opening width of the first opening and the second opening may be the same as or greater than the second diameter.

According to various embodiments, the opening width of the first opening and the second opening may be greater than a half of the first diameter.

According to various embodiments, the position of the first cutting part may be determined so as to allow the first shaft to be received into the first through hole through the first opening at an angle beyond the rotational angle of the first housing, and the position of the second cutting part may be determined so as to allow the second shaft to be received into the second through hole through the second opening at an angle beyond the rotational angle of the second housing.

According to various embodiments, the rotational angle range of the first housing is substantially the same as the rotational angle range of the second housing.

According to various embodiments, the position of the first cutting part may be determined so as to allow the first shaft to be within the rotational angle of the first housing and prevent the first shaft from being separated from the first through hole, and the position of the second cutting part may be determined so as to allow the second shaft to be within the rotational angle of the second housing and prevent the second shaft from being separated from the second through hole.

According to various embodiments, the first shaft and the second shaft may include, at ends thereof, engaging parts configured to prevent the received first wing structure and second wing structure from being separated, respectively.

According to various embodiments, the hinge module may include a hinge housing and a hinge device disposed on the hinge housing and connected to the first housing and the second housing, and the at least one protective structure may be arranged at opposite ends of the hinge housing.

According to various embodiments, the electronic device may further include blocking members disposed to cover the edge of the display between the first wing structure and the second wing structure and the display.

According to various embodiments, the electronic device may further include a first protective frame disposed on the first housing while interposing the edge of the display therebetween and a second protective frame disposed on the second housing while interposing the edge of the display therebetween.

According to various embodiments, at least a portion of the first wing structure may be flexibly disposed between the edge of the display and the first protective frame, and at least a portion of the second wing structure may be flexibly disposed between the edge of the display and the second protective frame.

According to various embodiments, the blocking members, the first protective frame, and the protective frame may overlap the edge of the display on the same line, when the display is viewed from above.

According to various embodiments, the blocking members may be fixed together to the first wing structure and the second wing structure.

According to various embodiments, the blocking members may include a first blocking member fixed to the first wing structure and a second blocking member fixed together to the second wing structure, and the first blocking member and the second blocking member may be arranged and seamlessly connected to each other.

According to various embodiments, the blocking members may include at least one among PU, TPU, or a metal plate.

According to various embodiments, the first wing structure and the second wing structure may include engaging pieces arranged thereunder and protruding downward so as to support ends of the blocking members.

According to various embodiments, the blocking members 540 may include catching protrusions protruding downward so as to support the edge of the display.

According to various embodiments, the support member, the first wing structure, and the second wing structure may be made of a metal material.

The embodiments of the disclosure disclosed in the specification and drawings are merely provided for specific examples to easily explain the technical content according to the embodiments of the disclosure and help understanding of the embodiments of the disclosure, and are not intended to limit the scope of the embodiments of the disclosure.

## Claims

1. An electronic device (100, 400) comprising:
a hinge module (164, 464);
a first housing (110, 410) connected to the hinge module;
a second housing (120, 420) connected to the hinge module so as to be foldable with respect to the first housing;
a flexible display (130, 430) disposed to be supported by at least a portion of the first housing and at least a portion of the second housing via the hinge module; and
at least one protective structure (500) which is disposed to protect the edge of the display in a folding region (h3) corresponding to the hinge module,
wherein the at least one protective structure (500) comprises:
a support body (510) disposed on at least a portion of the hinge module and comprising a first shaft (511) and a second shaft (512) which are spaced a predetermined interval apart from each other and protrude from the support body (510);
a first wing structure (520) comprising a first hinge arm (521) comprising a first through hole (5211) and rotatably coupled to the first shaft in a manner where the first shaft extends through the first through hole; and
a second wing structure (530) comprising a second hinge arm (531) comprising a second through hole (5311) and rotatably coupled to the second shaft in a manner where the second shaft extends through the second through hole,
wherein the first hinge arm is rotatably coupled to the first shaft through a first opening (5212) at least partially formed in the first through hole (5211), and
wherein the second hinge arm is rotatably coupled to the second shaft through a second opening (5312) at least partially formed in the second through hole (5311),
wherein the first shaft comprises a first cutting part (5111) partially cut in a lengthwise direction in a circular horizontal cross-sectional structure of the first shaft, and
wherein the second shaft comprises a second cutting part (5121) partially cut in a lengthwise direction in a circular horizontal cross-sectional structure of the second shaft,
wherein the first shaft and the second shaft are configured to have a first diameter (D) passing the center thereof and a second diameter (D1) passing the center and reaching the cutting parts in the horizontal cross-sectional structure,
wherein the opening width (D2) of the first opening and the second opening is the same as or greater than the second diameter (D1),
wherein the opening width (D2) of the first opening and the second opening is smaller than the first diameter (D),
wherein the position of the first cutting part (5111) is determined so as to allow the first shaft (511) to be received into the first through hole (5211) through the first opening (5212) at an angle beyond a rotational angle (θ1) range of the first housing, and
wherein the position of the second cutting part (5121) is determined so as to allow the second shaft (512) to be received into the second through hole (5311) through the second opening (5312) at an angle beyond a rotational angle (θ1) range of the second housing, and
wherein the first shaft and the second shaft comprises, at ends thereof, engaging parts (5112, 5122) configured to prevent the received first wing structure (520) and second wing structure (530) from being separated, respectively.

2. The electronic device of claim 1, wherein the opening width (D2) of the first opening and the second opening is configured to be greater than a half of the first diameter (D).

3. The electronic device of claim 1, wherein the rotational angle (θ1) range of the first housing is substantially the same as the rotational angle (θ1) range of the second housing.

4. The electronic device of claim 1, wherein the position of the first cutting part (5111) is determined so as to allow the first shaft (511) to be within a rotational angle (θ1) range of the first housing (410) and prevent the first shaft (511) from being separated from the first through hole (5211), and
wherein the position of the second cutting part (5121) may be determined so as to allow the second shaft (512) to be within a rotational angle (θ1) range of the second housing (420) and prevent the second shaft (512) from being separated from the second through hole (5311).

5. The electronic device of claim 1, wherein the hinge module (464) comprises:
a hinge housing (470) ; and
a hinge device disposed on the hinge housing and connected to the first housing and the second housing, and
wherein the at least one protective structure (500) comprises two protective structures (500), each arranged at opposite ends of the hinge housing (470).

6. The electronic device of claim 1, further comprising a bendable blocking member (540) disposed to cover the edge of the display (430) between the first wing structure (520) and the second wing structure (530) and the display (430).

7. The electronic device of claim 6, further comprising:
a first protective frame (440) disposed on the first housing while interposing the edge of the display therebetween; and
a second protective frame (450) disposed on the second housing while interposing the edge of the display therebetween.

8. The electronic device of claim 7, wherein at least a portion of the first wing structure (520) is flexibly disposed between the edge of the display and the first protective frame, and
wherein at least a portion of the second wing structure (530) is flexibly disposed between the edge of the display and the second protective frame.

9. The electronic device of claim 7, wherein the blocking member (540), the first protective frame (440), and the second protective frame (450) overlap the edge of the display (430) on the same line, when the display is viewed from above.

10. The electronic device of claim 6, wherein the blocking member (540) are fixed together to the first wing structure (520) and the second wing structure (530).

## Patentansprüche

1. Elektronische Vorrichtung (100, 400), umfassend:
ein Scharniermodul (164, 464);
ein erstes Gehäuse (110, 410), das mit dem Scharniermodul verbunden ist;
ein zweites Gehäuse (120, 420), das mit dem Scharniermodul verbunden ist, um so in Bezug auf das erste Gehäuse faltbar zu sein;
eine flexible Anzeige (130, 430), angeordnet, um durch zumindest einem Abschnitt des ersten Gehäuses und zumindest einem Abschnitt des zweiten Gehäuses über das Scharniermodul gestützt zu werden; und
zumindest eine Schutzstruktur (500), welche angeordnet ist, um den Rand des Displays in einem dem Scharniermodul entsprechenden Faltbereich (h3) zu schützen,
wobei die mindestens eine Schutzstruktur (500) umfasst:
einen Stützkörper (510), angeordnet an zumindest einem Abschnitt des Scharniermoduls, und eine erste Welle (511) und eine zweite Welle (512) umfasst, welche in einem vorbestimmten Abstand voneinander beabstandet sind und von dem Stützkörper (510) vorstehen;
eine erste Flügelstruktur (520), umfassend einen ersten Scharnierarm (521), umfassend ein erstes Durchgangsloch (5211), und drehbar an die erste Welle in einer Weise gekoppelt ist, bei der sich die erste Welle durch das erste Durchgangsloch erstreckt; und
eine zweite Flügelstruktur (530), umfassend einen zweiten Scharnierarm (531), umfassend ein zweites Durchgangsloch (5311), und drehbar an die zweite Welle gekoppelt ist, bei der sich die zweite Welle durch das zweite Durchgangsloch erstreckt,
wobei der erste Scharnierarm drehbar mit der ersten Welle durch eine erste Öffnung (5212) gekoppelt ist, die zumindest teilweise in dem ersten Durchgangsloch (5211) ausgebildet ist, und wobei der zweite Scharnierarm drehbar mit der zweiten Welle durch eine zweite Öffnung (5312) gekoppelt ist, die zumindest teilweise in dem zweiten Durchgangsloch (5311) ausgebildet ist,
wobei die erste Welle ein erstes Schneidteil (5111) umfasst, das teilweise in einer Längsrichtung in einer kreisförmigen horizontalen Querschnittsstruktur der ersten Welle geschnitten ist, und
wobei die zweite Welle einen zweiten Schneidteil (5121) umfasst, der teilweise in einer Längsrichtung in einer kreisförmigen horizontalen Querschnittsstruktur der zweiten Welle geschnitten ist,
wobei die erste Welle und die zweite Welle konfiguriert sind, um einen ersten Durchmesser (D) aufzuweisen, der die Mitte davon passiert, und einen zweiten Durchmesser (D1), der die Mitte passiert und die Schneidteile in der horizontalen Querschnittsstruktur erreicht,
wobei die Öffnungsbreite (D2) der ersten Öffnung und der zweiten Öffnung gleich oder größer als der zweite Durchmesser (D1) ist,
wobei die Öffnungsbreite (D2) der ersten Öffnung und der zweiten Öffnung kleiner als der erste Durchmesser (D) ist,
wobei die Position des ersten Schneidteils (5111) bestimmt ist, um so zu erlauben, dass die erste Welle (511) in einem Winkel über einen Drehwinkelbereich (θ1) des ersten Gehäuses hinaus in das erste Durchgangsloch (5211) durch die erste Öffnung (5212) aufgenommen zu werden, und
wobei die Position des zweiten Schneidteils (5121) bestimmt ist, um zu erlauben, dass die zweite Welle (512) in einem Winkel über einen Drehwinkelbereich (θ1) des zweiten Gehäuses hinaus in das zweite Durchgangsloch (5311) durch die zweite Öffnung (5312) aufgenommen zu werden, und
wobei die erste Welle und die zweite Welle an den Enden davon Eingriffsteile (5112, 5122) umfassen, die konfiguriert sind, um zu verhindern, dass die aufgenommene erste Flügelstruktur (520) bzw. zweite Flügelstruktur (530) getrennt werden.

2. Elektronische Vorrichtung nach Anspruch 1, wobei die Öffnungsbreite (D2) der ersten Öffnung und der zweiten Öffnung konfiguriert ist, um größer als die Hälfte des ersten Durchmessers (D) zu sein.

3. Elektronische Vorrichtung nach Anspruch 1, wobei der Drehwinkelbereich (θ1) des ersten Gehäuses im Wesentlichen der gleiche ist wie der Drehwinkelbereich (θ1) des zweiten Gehäuses.

4. Elektronische Vorrichtung nach Anspruch 1, wobei die Position des ersten Schneidteils (5111) bestimmt ist, um so zu erlauben, dass die erste Welle (511) innerhalb eines Drehwinkelbereichs (θ1) des ersten Gehäuses (410) zu sein und zu verhindern, dass die erste Welle (511) von dem ersten Durchgangsloch (5211) getrennt wird, und
wobei die Position des zweiten Schneidteils (5121) bestimmt werden kann, um so zu erlauben, dass sich die zweite Welle (512) innerhalb eines Drehwinkelbereichs (θ1) des zweiten Gehäuses (420) befindet und zu verhindern, dass die zweite Welle (512) von dem zweiten Durchgangsloch (5311) getrennt wird.

5. Elektronische Vorrichtung nach Anspruch 1, wobei das Scharniermodul (464) umfasst:
ein Scharniergehäuse (470); und
eine Scharniervorrichtung, angeordnet an dem Scharniergehäuse und verbunden mit dem ersten Gehäuse und dem zweiten Gehäuse, und
wobei die mindestens eine Schutzstruktur (500) zwei Schutzstrukturen (500) umfasst, die jeweils an gegenüberliegenden Enden des Scharniergehäuses (470) angeordnet sind.

6. Elektronische Vorrichtung nach Anspruch 1, ferner umfassend ein biegbares Blockierelement (540), angeordnet, um den Rand der Anzeige (430) zwischen der ersten Flügelstruktur (520) und der zweiten Flügelstruktur (530) und der Anzeige (430) abzudecken.

7. Elektronische Vorrichtung nach Anspruch 6, ferner umfassend:
einen ersten Schutzrahmen (440), angeordnet an dem ersten Gehäuse, während der Rand der Anzeige dazwischen gestellt ist; und
einem zweiten Schutzrahmen (450), angeordnet auf dem zweiten Gehäuse, während die Kante der Anzeige dazwischen gestellt ist.

8. Elektronische Vorrichtung nach Anspruch 7, wobei zumindest ein Teil der ersten Flügelstruktur (520) flexibel zwischen dem Rand der Anzeige und dem ersten Schutzrahmen angeordnet ist, und
wobei zumindest ein Abschnitt der zweiten Flügelstruktur (530) flexibel zwischen dem Rand der Anzeige und dem zweiten Schutzrahmen angeordnet ist.

9. Elektronische Vorrichtung nach Anspruch 7, wobei das Blockierelement (540), der erste Schutzrahmen (440) und der zweite Schutzrahmen (450) den Rand der Anzeige (430) auf derselben Linie überlappen, wenn die Anzeige von oben betrachtet wird.

10. Elektronische Vorrichtung nach Anspruch 6, wobei das Blockierelement (540) zusammen an der ersten Flügelstruktur (520) und der zweiten Flügelstruktur (530) befestigt ist.

## Revendications

1. Dispositif électronique (100, 400), comprenant :
un module de charnière (164, 464) ;
un premier boîtier (110, 410) relié au module de charnière ;
un second boîtier (120, 420) relié au module de charnière de façon à être pliable par rapport au premier boîtier ;
une unité d'affichage souple (130, 430) disposée pour être supporté par au moins une partie du premier boîtier et au moins une partie du second boîtier par l'intermédiaire du module charnière ; et
au moins une structure protectrice (500) qui est disposée pour protéger le bord de l'unité d'affichage dans une région de pliage (h3) correspondant au module de charnière,
l'au moins une structure protectrice (500) comprenant :
un corps de support (510) disposé sur au moins une partie du module de charnière et comprenant un premier arbre (511) et un second arbre (512) qui sont espacés d'un intervalle prédéterminé l'un de l'autre et font saillie du corps de support (510) ;
une première structure d'aile (520) comprenant un premier bras de charnière (521) comprenant un premier trou traversant (5211) et accouplé en rotation au premier arbre de manière que le premier arbre s'étende à travers le premier trou traversant ; et
une seconde structure d'aile (530) comprenant un second bras de charnière (531) comprenant un second trou traversant (5311) et accouplé en rotation au second arbre de manière que le second arbre s'étende à travers le second trou traversant,
ledit premier bras de charnière étant accouplé en rotation au premier arbre par une première ouverture (5212) au moins en partie formée dans le premier trou traversant (5211), et
ledit second bras de charnière étant accouplé en rotation au second arbre par une seconde ouverture (5312) au moins en partie formée dans le second trou traversant (5311),
ledit premier arbre comprenant une première partie de découpe (5111) en partie découpée dans une direction longitudinale dans une structure en section transversale horizontale circulaire du premier arbre, et
ledit second arbre comprenant une seconde partie de découpe (5121) en partie découpée dans une direction longitudinale dans une structure en section transversale horizontale circulaire du second arbre,
ledit premier arbre et ledit second arbre étant configurés pour présenter un premier diamètre (D) passant par leur centre et un second diamètre (D1) passant par le centre et atteignant les parties de découpe dans la structure en section transversale horizontale,
la largeur d'ouverture (D2) de la première ouverture et de la seconde ouverture étant supérieure ou égale au second diamètre (D1),
ladite largeur d'ouverture (D2) de la première ouverture et de la seconde ouverture étant inférieure au premier diamètre (D),
ladite position de la première partie de découpe (5111) étant déterminée de façon à permettre au premier arbre (511) d'être reçu dans le premier trou traversant (5211) par la première ouverture (5212) à un angle au-delà d'une plage d'angle de rotation (θ1) du premier boîtier, et
ladite position de la seconde partie de découpe (5121) étant déterminée de façon à permettre au second arbre (512) d'être reçu dans le second trou traversant (5311) par la seconde ouverture (5312) à un angle au-delà d'une plage d'angle de rotation (θ1) du second boîtier, et
ledit premier arbre et ledit second arbre comprenant, au niveau de leurs extrémités, des parties d'engagement (5112, 5122) configurées pour empêcher respectivement la première structure d'aile (520) et la seconde structure d'aile (530) reçues d'être séparées.

2. Dispositif électronique selon la revendication 1, ladite largeur d'ouverture (D2) de la première ouverture et de la seconde ouverture étant configurée pour être supérieure à une moitié du premier diamètre (D).

3. Dispositif électronique selon la revendication 1, ladite plage d'angle de rotation (θ1) du premier boîtier étant sensiblement la même que ladite plage d'angle de rotation (θ1) du second boîtier.

4. Dispositif électronique selon la revendication 1, ladite position de la première partie de découpe (5111) étant déterminée de façon à permettre au premier arbre (511) d'être dans une plage d'angle de rotation (θ1) du premier boîtier (410) et d'empêcher le premier arbre (511) d'être séparé du premier trou traversant (5211), et
ladite position de la seconde partie de découpe (5121) pouvant être déterminée de façon à permettre au second arbre (512) d'être dans une plage d'angle de rotation (θ1) du second boîtier (420) et d'empêcher le second arbre (512) d'être séparé du second trou traversant (5311).

5. Dispositif électronique selon la revendication 1, ledit module de charnière (464) comprenant :
un boîtier de charnière (470) ; et
un dispositif de charnière disposé sur le boîtier de charnière et relié au premier boîtier et au second boîtier, et
ladite au moins une structure protectrice (500) comprenant deux structures protectrices (500), chacune étant agencée au niveau d'extrémités opposées du boîtier de charnière (470).

6. Dispositif électronique selon la revendication 1, comprenant en outre un élément de blocage pliable (540) disposé pour couvrir le bord de l'unité d'affichage (430) entre la première structure d'aile (520) et la seconde structure d'aile (530) et l'unité d'affichage (430).

7. Dispositif électronique selon la revendication 6, comprenant en outre :
un premier cadre protecteur (440) disposé sur le premier boîtier tout en interposant le bord de l'unité d'affichage entre eux ; et
un second cadre protecteur (450) disposé sur le second boîtier tout en interposant le bord de l'unité d'affichage entre eux.

8. Dispositif électronique selon la revendication 7, au moins une partie de la première structure d'aile (520) étant disposée de manière flexible entre le bord de l'unité d'affichage et le premier cadre protecteur, et
au moins une partie de la seconde structure d'aile (530) étant disposée de manière flexible entre le bord de l'unité d'affichage et le second cadre protecteur.

9. Dispositif électronique selon la revendication 7, ledit élément de blocage (540), le premier cadre protecteur (440) et le second cadre protecteur (450) chevauchant le bord de l'unité d'affichage (430) sur la même ligne, lorsque l'unité d'affichage est vue du dessus.

10. Dispositif électronique selon la revendication 6, ledit élément de blocage (540) étant fixé conjointement à la première structure d'aile (520) et la seconde structure d'aile (530).
